# EUROPÄISCHE PATENTSCHRIFT

(11) **EP 1 077 151 B1**
(45) Veröffentlichungstag und Bekanntmachung des Hinweises auf die Patenterteilung: **23.04.2003**
(21) Anmeldenummer: 00114820.4
(22) Anmeldetag: 11.07.2000
(51) Int. Cl.: B60N 2/02, B60N 2/48

(54) **Kopfstützenantrieb**
Headrest drive
Motorisation pour appui-tête

(30) Priorität: 19.08.1999 DE 19939349
(43) Veröffentlichungstag der Anmeldung: 21.02.2001
(73) Patentinhaber: Siemens Aktiengesellschaft, 80333 München (DE)
(72) Erfinder: Kober, Rainer, 64297 Darmstadt (DE); Neis, Peter, 65604 Elz (DE)

(56) Entgegenhaltungen:
- DE-A- 3 637 362
- DE-C- 4 023 127
- DE-C- 4 304 663
- DE-U- 29 723 240
- GB-A- 2 011 648

## Beschreibung

Die Erfindung befaßt sich mit einem Kopfstützenantrieb für Kraftfahrzeuge mit einem elektrischen Antriebsmotor.

Aus Sicherheits- und Komfortaspekten ist es wünschenswert, die Kopfstützen eines Fahrzeuges automatisch verfahren zu können. Neben pneumatischen Lösungen sind bereits auch Kopfstützenantriebe mit elektrischen Antrieben bekannt, die keine Druckluftversorgung benötigen. So ist beispielsweise aus der DE 36 37 362 C2 ein Kopfstützenantrieb bekannt, bei welchem ein elektrischer Antriebsmotor über eine flexible Welle einen Spindeltrieb antreibt, der die Verfahrbewegung der Kopfstütze bewirkt. Aus der DE 43 04 636 C1 ist eine Lösung bekannt, bei welcher ein Motor eine Zahnstange antreibt, deren Transversalbewegung wiederum das Verstellen der Kopfstütze bewirkt. Die vorbeschriebenen Lösungen besitzen den Nachteil, daß in dem Sitz erhebliche Maßnahmen für die Aufnahme und Führung der beweglichen Teile getroffen werden müssen, die den Konstruktionsaufwand und damit die Herstellungskosten erhöhen. Eine Modulbauweise, wie sie insbesondere in der Fahrzeugbranche zur Kostenreduzierung gefordert wird, ist bei diesen Lösungen kaum möglich.

Die Aufgabe der Erfindung besteht darin, einen Kopfstützenantrieb für Kraftfahrzeuge zu schaffen, der sich bei elektrischem Antrieb in Modulbauweise realisieren läßt.

Erfindungsgemäß wird die Aufgabe dadurch gelöst, daß der Motor ein Hebelgetriebe mit zwei sich kreuzenden, verschwenkbar gelagerten Hebeln antreibt, deren freie Enden in einer quer zur Verfahrrichtung der Kopfstütze liegenden Nut in einem Führungselement verschieblich geführt sind, das mit der Kopfstütze über wenigstens eine Strebe verbunden und in einer Führung in der Verfahrrichtung der Kopfstützen beweglich geführt ist.

Der erfindungsgemäße Kopfstützenantrieb bietet den Vorteil, daß er ähnlich einem Scheibenheberantrieb sehr leicht als Modul gefertigt werden kann, für das sitzseitig lediglich einfache Befestigungspunkte vorgesehen werden müssen. Derartige Hebelgetriebe arbeiten auch sehr geräuscharm, was dem Komfort zugute kommt.

Ein weiterer Vorteil des scherenartig aufgebauten Hebelgetriebes besteht in seiner extrem flachen Bauweise, die es erlaubt, die Tiefe der Sitzlehne sehr schmal zu halten.

Trotz seines einfachen, platzsparenden Aufbaus ermöglicht das erfindungsgemäße Hebelgetriebe vergleichsweise große Hübe.

Zusätzliche Merkmale der Erfindung sind in den abhängigen Ansprüchen angegeben.

In einer bevorzugten Ausführungsform der Erfindung ist vorgesehen, daß die beiden Hebel getrennt voneinander um verschiedene Drehachsen schwenkbar gelagert sind, wobei vorzugsweise die Hebel mit Zahnrädern oder Zahradsegmenten um ihre Drehachse versehen sind, die ineinander kämmen.

Bei dieser Lösung arbeitet das Hebelgetriebe nicht nach einem Scheren-Hubprinzip, sondern es wird ein sehr einfach wirkendes Hebelprinzip realisiert, bei welchem die gegenläufige Zwangsbewegung der Hebelarme nicht über eine Dreieckgeometrie, sondern durch die ineinander kämmenden Zahnräder erreicht wird.

Zweckmäßigerweise treibt der Motor über ein Untersetzungsgetriebe das Zahnrad bzw. Zahnradsegment eines Hebels an. Das Untersetzungsgetriebe ermöglicht den Einsatz kleiner, schnell drehender Elektromotoren, die vergleichsweise wenig Bauraum benötigen und daher kleine Modulabmessungen ermöglichen. Das Untersetzungsgetriebe kann grundsätzlich an einer beliebigen Stelle eines Zahnrades eines der beiden Hebel angreifen, so daß man in der Anordnung des Motors weitestgehend frei ist und sich den Erfordernissen eines jeweiligen Sitzes leicht anpassen kann.

Da die erforderlichen Verstellkräfte beim Verstellen einer Kopfstütze erheblich niedriger liegen, als bei einem zu verstellenden Fenster, bestehen vorzugsweise wenigstens die Hebel des Hebelgetriebes aus Kunststoff, wodurch sich die Herstellungskosten und auch das Gewicht des Kopfstützenantriebs reduzieren lassen. Besonders bevorzugt ist es, die Zahnräder bzw. Zahnradsegmente einstückig mit den Hebeln auszubilden, wobei insbesondere bei einer Herstellung aus Kunststoff eine weitere Senkung der Fertigungskosten und des Gewichts möglich sind.

Vorzugsweise sind zwei Rundstreben zur Verbindung des Führungselements mit der eigentlichen Kopfstütze vorgesehen, die in fest montierten Führungsrohren geführt sind, die über die Streben gleichzeitig die Führung des Führungselements übernehmen. Bei dieser Lösung können die sitzseitig meist ohnehin vorgesehenen Führungsrohre zur Führung des Führungselements genutzt werden, so daß ein Einbau des erfindungsgemäßen Kopfstützenantriebs ohne weitreichende Modifikationen auch in bereits bestehenden Sitzkonstruktionen denkbar ist. In jedem Fall ist der bei einem Sitz oder einer Fahrzeug-Rückbank zu betreibende konstruktive Aufwand zur Integration des Kopfstützenantriebs sehr gering.

In einer besonders bevorzugten Ausführungsform der Erfindung ist vorgesehen, daß die wenigstens eine Strebe ein Gelenk aufweist, das ein Abklappen der Kopfstütze nach vorne oder hinten bei entsprechend weit ausgefahrener Kopfstütze ermöglicht.

Eine derartige Lösung erlaubt es, die Kopfstützen auf nicht genutzten Sitzplätzen in einem Fahrzeug in einfacher Weise abzuklappen und dadurch die Rundumsicht für den Fahrer zu verbessern. Insbesondere auf den Rücksitzen eines Fahrzeuges ist ein derartiger Kopfstützenantrieb von Vorteil. Besonders vorteilhaft ist die Kombination eines derartigen Kopfstützenantriebes mit einer Sitzbelegungserkennung, die bei nicht genutzten Sitzen automatisch das Wegklappen der Kopfstütze veranlaßt und bei belegten Sitzen die zugehörige Kopfstütze in ihre aufgerichtete Stellung verfährt. Eine Einstellung der Kopfstütze auf die Körpergröße kann ggf. manuell erfolgen.

Von Vorteil bei derartigen Abklapplösungen ist der durch das Hebelgetriebe ermöglichte große Hub, der problemlos ein entsprechend weites Ausfahren der Kopfstütze erlaubt.

Es ist darauf zu achten, daß das Strebenteil zwischen Kopfstütze und Gelenk ausreichend lang ist, um in der obersten Gebrauchsstellung der Kopfstütze eine ausreichende Führungslänge zwischen der Strebe und dem Führungsrohr bereitzuhalten.

Vorzugsweise bestehen die Gelenke der beiden Streben aus mit gummielastischem Werkstoff ummantelten Zugelementen, die beispielsweise aus einem Draht bestehen oder ähnlich einem Bowdenzug aufgebaut sein können. Die Gelenke können beispielsweise an ihren Enden jeweils über einen Gewindezapfen verfügen, die in Rohrelemente, welche die oberen und unteren Strebenteile bilden, eingeschraubt sind.

Derartige Gummigelenke sind äußerst einfach aufgebaut und kostengünstig herzustellen und bieten mit den ummantelten Zugelementen gleichzeitig die Möglichkeit, die erforderlichen Zugkräfte zum Aufrichten der Kopfstütze übertragen zu können.

Das Umklappen der mit der Kopfstütze verbundenen oberen Strebenteile kann beispielsweise dadurch realisiert werden, daß die Führungsrohre an ihren oberen Enden Umlenkbereiche besitzen, die nach vorne oder hinten offen sind und bei entsprechend weit ausgefahrener Kopfstütze deren Umklappen zur offenen Seite hin ermöglichen. Das Umklappen selbst wird vorzugsweise alleine durch die Schwerkraft erreicht, indem die Führungsrohre beispielsweise entsprechend der Rückenlehne des Fahrzeugsitzplatzes geneigt angeordnet sind. Dadurch erfolgt bei ausreichend weitem Ausfahren der Kopfstützen ein Abklappen nach hinten, beispielsweise in eine geeignete Ausnehmung in der Hutablage eines Fahrzeuges.

Um die abgeklappte Kopfstütze in einer definierten Lage zu halten, besteht vorzugsweise der Umlenkbereich aus einer Rundung, an die sich eine im wesentlichen horizontal ausgerichtete Auflage für das obere Strebenteil anschließt, die zweckmäßigerweise einen im wesentlichen halbkreisförmigen Querschnitt entsprechend dem Querschnitt des oberen Strebenelements besitzt. Ein Endschalter kann den Verfahrweg der Kopfstütze begrenzen, wobei der Endschalter ein Sensor wie z. B. ein Hall-Sensor sein kann.

Nachfolgend wird anhand der beigefügten Zeichnungen näher auf ein Ausführungsbeispiel der Erfindung eingegangen. Es zeigen:
- Fig. 1: eine Schrägansicht eines elektrischen Kopfstützenantriebs;
- Fig. 2: eine Schnittdarstellung eines Gelenks zur Realisierung der Abklappfunktion der Kopfstütze in Fig. 1.

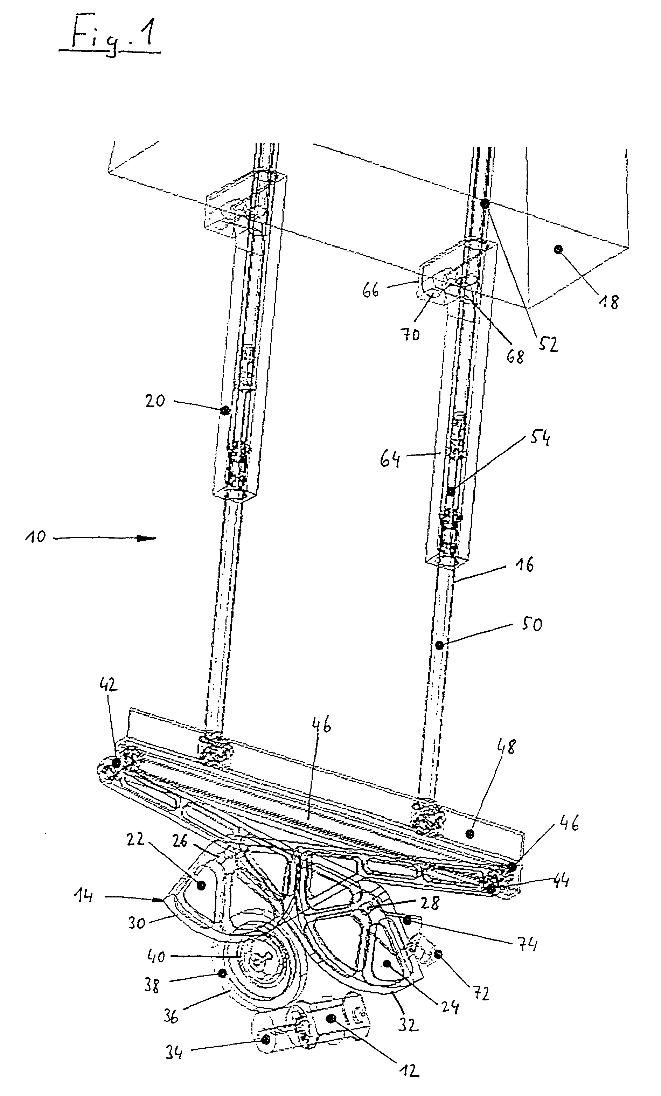

Der in Fig. 1 gezeigte Kopfstützenantrieb 10 besteht im wesentlichen aus einem von einem Elektromotor 12 angetriebenen Getriebe 14, das die Rotationsbewegung des Motors 12 in eine Linearbewegung umsetzt, mehrteiligen Verbindungsstreben 16, welche das Getriebe 14 mit einer Kopfstütze 18 verbinden, und Umlenkelementen 20, die fahrzeugseitig fest montiert sind und eine Führung der Streben 16 quer zu ihrer Verfahrrichtung bilden.

Das Verstellgetriebe 14 weist zwei sich kreuzende Hebel 22, 24 auf, die um jeweils eine Lagerachse 26, 28 drehbar an einem nicht dargestellten Halter gelagert sind. Die Hebel 22, 24 sind konzentrisch um die Lagerachsen 26, 28 als Zahnadsegmente 30, 32 mit gleichem Teilkreisdurchmesser ausgebildet, wobei die Zahnradsegmente 30, 32 der beiden Hebel 22, 24 ineinander kämmen und dadurch für eine synchrone, gegenläufige Schwenkbewegung der Hebel 22, 24 sorgen.

Um einen platzsparenden Motor mit hoher Drehzahl einsetzen zu können, treibt der Motor 12 eine Schnecke 34 an, die in einem Schneckenrad 36 einer Getriebestufe 38 kämmt, deren Abtriebszahnrad 40 mit dem Zahnradsegment 30 des ersten Hebels 22 in Eingriff steht. An den Enden der Hebelarme 22, 24 sind drehbar gelagerte Rollen 42, 44 vorgesehen, die in einer quer zur Verfahrrichtung der Kopfstütze 18 verlaufenden Führungsnut 46 eines Führungselements 48 beweglich gehalten sind. Das Führungselement 46 ist starr mit unteren Strebenrohren 50 der beiden Streben 16 verbunden.

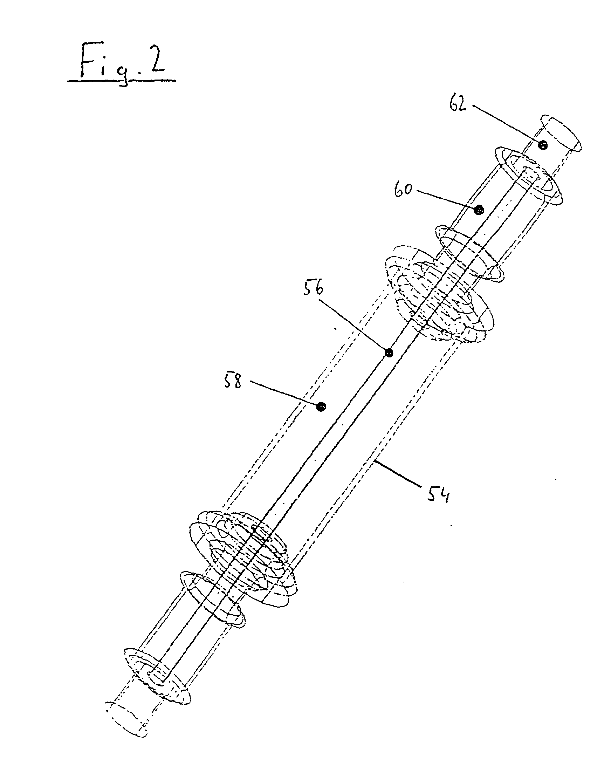

Die Streben 16 bestehen neben den bereits erwähnten unteren Strebenrohren 50 jeweils aus einem oberen Strebenrohr 52 und aus flexiblen Elementen 54, die die beiden Strebenrohre 50, 52 gelenkig miteinander verbinden. Der Aufbau der flexiblen Elemente 54 ist in Fig. 2 näher dargestellt. Aus dieser Abbildung ist zu ersehen, daß die flexiblen Elemente 54 im wesentlichen aus einem Bowdenzug 56 und einer diesen ummantelnden Gummihülse 58 bestehen, wobei die Gummihülse 58 beidseitig jeweils von einem hohlgebohrten Gewindezapfen 60 begrenzt ist, die in das obere Strebenrohr 52 bzw. das untere Strebenrohr 50 einschraubbar sind. Der Zusammenhalt der flexiblen Elemente 54 wird durch Quetschverbindungen 62 sichergestellt, an welchen der Bowdenzug 56 festgelegt ist und die die Gewindezapfen 60 und die Gummihülse 58 evtl. unter Vorspannung zwischen sich festhalten. Die flexiblen Elemente 54 sind so bescharfen, daß ihr größter Durchmesser nicht größer als der Durchmesser der Strebenrohre 50, 52 ist.

Die Streben 16 sind in Umlenkelementen 20 geführt, die in die Rückenlehne beispielsweise einer Fahrzeugrückbank integriert sind. Die Umlenkelemente 20 bestehen im wesentlichen aus einem rohrartigen Führungsbereich 64, der die Streben 16 führt, und einem Umlenkbereich 66, der im wesentlichen aus einer Rundung 68 und einer sich daran anschließenden, im wesentlichen horizontal ausgerichteten Auflage 70 besteht, wobei der halbkreisförmige Querschnitt der Rundung 68 und der Auflage 70 dem Durchmesser der Strebe 16 angepaßt ist. Die Auflage 70 der beiden Streben 16 zeigen in eingebauter Lage zum Fahrzeugheck und die Führungsbereiche 64 sind entsprechend der Rückenlehne geneigt angeordnet.

Der Motor 12 und das Getriebe 14 sind an einer bereits erwähnten Halterung (nicht gezeigt) gelagert oder befestigt, so daß der gesamte Kopfstützenantrieb 10 gemäß Fig. 1 in Modulbauweise vormontiert ist und bei der Montage der Rückbank in die Rückenlehne integriert wird.

In der in Fig. 1 dargestellten Gebrauchsstellung der Kopfstützen 18 befinden sich die flexiblen Elemente 54 im Führungsbereich 64, und auch ein Teil der oberen Strebenrohre 52 befindet sich über eine bestimmte Länge im Führungsbereich 64. Damit kann die Kopfstütze 18 bei Unfällen die notwendigen Kräfte aufnehmen, wobei eine Höheneinstellung zur Anpassung an die Körpergröße des Fahrzeuginsassen durch Betätigen des Motors 12 und entsprechendes Verschwenken der Hebel 22, 24 möglich ist.

Der Kopfstützenantrieb 10 ist vorzugsweise mit einer Sitzbelegungserkennung gekoppelt, die bei einem belegten Sitz die Kopfstütze 18 in die in Fig. 1 dargestellte Position verfährt. Wird die Sitzbelegungserkennung nicht ausgelöst, verfährt der Motor 12 die Streben 16 und die Kopfstütze 18 in eine Position, in welcher sich die flexiblen Elemente 54 in den Umlenkbereichen 66 befinden. Bedingt durch die Neigung der Streben 16 führt das Eigengewicht der Kopfstütze 18 zu einem Abklappen nach hinten, beispielsweise in einer Ausnehmung in der Hutablage, wobei sich die oberen Strebenrohre 52 auf die Auflage 70 legen. Diese Position stellt die maximal ausgefahrene Endstellung des Kopfstützenantriebs 10 dar, die durch einen Mikroschalter 72 und eine Schaltplatte 74 im Bereich des Zahnradsegmentes 32 des zweiten Hebels 24 erfaßbar ist. Das Abklappen der Kopfstützen 18 ist durch die flexiblen Gummihülsen 58 ohne weiteres möglich.

Sobald sich eine Person auf den entsprechenden Sitzplatz des Fahrzeuges setzt, aktiviert die Sitzplatzerkennung wiederum den Elektromotor 12, wobei die zum Aufrichten der Kopfstütze 18 erforderlichen Zugkräfte durch die Bowdenzüge 56 im inneren der flexiblen Elemente 54 auf die oberen Strebenrohre 52 übertragbar sind.

Aus Kosten- und Gewichtsgründen sind die Hebel 22, 24 einstückig aus Kunststoff gefertigt.

## Patentansprüche

1. Kopfstützenantrieb für Kraftfahrzeuge mit einem elektrischen Antriebsmotor (12), **dadurch gekennzeichnet, daß** der Motor (12) ein Hebelgetriebe (14) mit zwei sich kreuzenden, verschwenkbar gelagerten Hebeln (22, 24) antreibt, deren freie Enden (42, 44) in einer quer zur Verfahrrichtung der Kopfstütze (18) liegenden Nut (46) in einem Führungselement (48) verschieblich geführt sind, das mit der Kopfstütze (18) über wenigstens eine Strebe (16) verbunden und in einer Führung (64) in der Verfahrrichtung der Kopfstütze (18) beweglich geführt ist.

2. Kopfstützenantrieb nach Anspruch 1, **dadurch gekennzeichnet, daß** die beiden Hebel (22, 24) getrennt voneinander um verschiedene Drehachsen (26, 28) schwenkbar gelagert sind.

3. Kopfstützenantrieb nach Anspruch 2, **dadurch gekennzeichnet, daß** die Hebel (22, 24) mit Zahnrädern oder Zahnradsegmenten (30, 32) um ihre Drehachsen (26, 28) versehen sind, die ineinander kämmen.

4. Kopfstützenantrieb nach Anspruch 3, **dadurch gekennzeichnet, daß** der Motor (12) über ein Untersetzungsgetriebe (38) das Zahnrad bzw. Zahnradsegment (30) eines Hebels (22) antreibt.

5. Kopfstützenantrieb nach einem der vorhergehenden Ansprüche, **dadurch gekennzeichnet, daß** wenigstens die Hebel (22, 24) des Hebelgetriebes (14) aus Kunststoff bestehen.

6. Kopfstützenantrieb nach einem der Ansprüche 3-5, **dadurch gekennzeichnet, daß** die Zahnräder bzw. Zahnradsegmente (30, 32) einstückig mit den Hebeln (22, 24) ausgebildet sind.

7. Kopfstützenantrieb nach einem der vorhergehenden Ansprüche, **dadurch gekennzeichnet, daß** an den Hebelenden drehbar gelagerte Rollen (42, 44) vorgesehen sind, die in der Nut (46) in dem Führungselement (48) laufen.

8. Kopfstützenantrieb nach einem der vorhergehenden Ansprüche, **dadurch gekennzeichnet, daß** zwei Rundstreben (16) zur Verbindung des Führungselements (48) mit der Kopfstütze (18) vorgesehen sind, die in fest montierten Führungsrohren (64) geführt sind, die über die Streben (16) gleichzeitig die Führung des Führungselements (48) übernehmen.

9. Kopfstützenantrieb nach einem der vorhergehenden Ansprüche, **dadurch gekennzeichnet, daß** die wenigstens eine Strebe (16) ein Gelenk (54) aufweist, das ein Abklappen der Kopfstütze (18) nach vome oder hinten bei entsprechend weit ausgefahrener Kopfstütze (18) ermöglicht.

10. Kopfstützenantrieb nach Anspruch 9, **dadurch gekennzeichnet, daß** das Strebenteil (52) zwischen Kopfstütze (18) und Gelenk (54) ausreichend lang ist, um in der obersten Gebrauchsstellung der Kopfstütze (18) eine ausreichende Führungslänge zwischen sich und dem Führungsrohr (64) bereitzuhalten.

11. Kopfstützenantrieb nach Anspruch 9 oder 10, **dadurch gekennzeichnet, daß** die Gelenke (54) der beiden Streben (16) aus mit gummielastischem Werkstoff (58) ummantelten Zugelementen (56) bestehen.

12. Kopfstützenantrieb nach einem der Ansprüche 9 bis 11, **dadurch gekennzeichnet, daß** die Gelenke (16) an ihren Enden jeweils über einen Gewindezapfen (60) verfügen, die in Rohrelemente (50, 52) eingeschraubt sind, welche das obere und ein unteres Strebenteil bilden.

13. Kopfstützenantrieb nach einem der Ansprüche 9 bis 12, **dadurch gekennzeichnet, daß** die Führungsrohre (20, 64) an ihren oberen Enden Umlenkbereiche (66) besitzen, die nach vorne oder hinten offen sind und bei entsprechend weit ausgefahrener Kopfstütze (18) deren Umklappen zur offenen Seite hin ermöglichen.

14. Kopfstützenantrieb nach einem der Ansprüche 9 bis 13, **dadurch gekennzeichnet, daß** die Führungsrohre (64) geneigt angeordnet sind.

15. Kopfstützenantrieb nach Anspruch 13 oder 14, **dadurch gekennzeichnet, daß** der Umlenkbereich (66) aus einer Rundung (68) besteht, an die sich eine im wesentlichen horizontal ausgerichtete Auflage (70) für das obere Strebenteil (52) anschließt.

16. Kopfstützenantrieb nach Anspruch 15, **dadurch gekennzeichnet, daß** die Rundung (68) und die Auflage (70) einen im wesentlichen halbkreisförmigen Querschnitt entsprechend dem Querschnitt des oberen Strebenteils (52) besitzen.

17. Kopfstützenantrieb nach einem der vorhergehenden Ansprüche, **dadurch gekennzeichnet, daß** ein Endschalter (72) vorgesehen ist, der den Verfahrweg der Kopfstütze (18) begrenzt.

18. Kopfstützenantrieb nach einem der vorhergehenden Ansprüche, **dadurch gekennzeichnet, daß** ein Schalter vorgesehen ist, mit welchem die Kopfstütze (18) über ihre normale Endstellung hinaus bis zum Umklappen verfahrbar ist.

19. Kopfstützenantrieb nach einem der vorhergehenden Ansprüche, **dadurch gekennzeichnet, daß** eine Sitzbelegungserkennung vorgesehen ist, die bei Belegung des Sitzes die Kopfstütze (18) wenigstens in ihre oberste Gebrauchsstellung zurückzieht und bei Nichtbelegung die Kopfstütze (18) umklappt.

20. Kopfstützenantrieb nach einem der vorhergehenden Ansprüche, **dadurch gekennzeichnet, daß** an einem oder mehreren Sitzen ein Tastschalter angeordnet ist, durch den eine elektromotorische Höhenjustierung der Kopfstütze betätigbar ist.

## Claims

1. Head-restraint drive for motor vehicles having an electric driving motor (12), **characterized in that** the motor (12) drives a lever mechanism (14) having two intersecting, pivotably mounted levers (22, 24), the free ends (42, 44) of which are guided displaceably in a groove (46) situated transversely with respect to the displacement direction of the head restraint (18) in a guide element (48), which is connected to the head restraint (18) via at least one strut (16) and is guided moveably in a guide (64) in the displacement direction of the head restraint (18).

2. Head-restraint drive according to Claim 1, **characterized in that** the two levers (22, 24) are mounted separately from each other in a manner such that they can pivot about different axes of rotation (26, 28).

3. Head-restraint drive according to Claim 2, **characterized in that** the levers (22, 24) are provided around their axes of rotation (26, 28) with gearwheels or gearwheel segments (30, 32) which intermesh.

4. Head-restraint drive according to Claim 3, **characterized in that** the motor (12) drives the gearwheel or gearwheel segment (30) of a lever (22) via a step-down gear (38).

5. Head-restraint drive according to one of the preceding claims, **characterized in that** at least the levers (22, 24) of the lever mechanism (14) consist of plastic.

6. Head-restraint drive according to one of Claims 3-5, **characterized in that** the gearwheels or gearwheel segments (30, 32) are of integral design with the levers (22, 24).

7. Head-restraint drive according to one of the preceding claims, **characterized in that** rotatably mounted rollers (42, 44) which run in the groove (46) in the guide element (48) are provided on the lever ends.

8. Head-restraint drive according to one of the preceding claims, **characterized in that** two round struts (16) are provided for connecting the guide element (48) to the head restraint (18), the said round struts being guided in fixedly mounted guide tubes (64), which at the same time take over the guidance of the guide element (48) via the struts (16).

9. Head-restraint drive according to one of the preceding claims, **characterized in that** the at least one strut (16) has a joint (54) which enables the head restraint (18) to be folded down forwards or rearwards when the head restraint (18) has been extended to an appropriate extent.

10. Head-restraint drive according to Claim 9, **characterized in that** the strut part (52) between the head restraint (18) and joint (54) is of a sufficient length in order to keep a sufficient guide length between itself and the guide tube (64) in the uppermost use position of the head restraint (18).

11. Head-restraint drive according to Claim 9 or 10, **characterized in that** the joints (54) of the two struts (16) comprise tension elements (56) encased by rubber-elastic material (58).

12. Head-restraint drive according to one of Claims 9 to 11, **characterized in that** the joints (16) have, at their ends, a respective threaded stem (60) which are screwed into tube elements (50, 52), which form the upper and a lower strut part.

13. Head-restraint drive according to one of Claims 9 to 12, **characterized in that** the guide tubes (20, 64) have, at their upper ends, deflecting regions (66) which are open forwards or rearwards and, when the head restraint (18) has been extended to an appropriate extent, enable the latter to be folded over towards the open side.

14. Head-restraint drive according to one of Claims 9 to 13, **characterized in that** the guide tubes (64) are arranged at an inclination.

15. Head-restraint drive according to Claim 13 or 14, **characterized in that** the deflecting region (66) comprises a rounded area (68) which is adjoined by an essentially horizontally aligned support (70) for the upper strut part (52).

16. Head-restraint drive according to Claim 15, **characterized in that** the rounded area (68) and the support (70) have an essentially semicircular cross section corresponding to the cross section of the upper strut part (52).

17. Head-restraint drive according to one of the preceding claims, **characterized in that** a limit switch (72) which limits the path of displacement of the head restraint (18) is provided.

18. Head-restraint drive according to one of the preceding claims, **characterized in that** a switch is provided which can be used to displace the head restraint (18) beyond its normal end position until it folds over.

19. Head-restraint drive according to one of the preceding claims, **characterized in that** a means of identifying seat occupancy is provided, which means pulls the head restraint (18) back at least into its uppermost use position when the seat is occupied, and folds the head restraint (18) over when the seat is not occupied.

20. Head-restraint drive according to one of the preceding claims, **characterized in that** a push-button is arranged on one or more seats and can be used to actuate a height adjustment of the head restraint by electric motor.

## Revendications

1. Commande d'appui-tête pour véhicules automobiles avec un moteur de commande électrique (12), **caractérisée en ce que** le moteur (12) entraîne un mécanisme à leviers (14) avec deux leviers (22, 24) qui se croisent, montés de manière à pivoter, dont les extrémités libres (42, 44) coulissent dans une rainure (46) s'étendant transversalement au sens de déplacement de l'appui-tête (18), laquelle se trouve dans un élément de guidage (48) qui est relié à l'appui-tête (18) par l'intermédiaire d'au moins un support (16) et se déplace dans un guide (64) dans le sens de déplacement de l'appui-tête (18).

2. Commande d'appui-tête selon la revendication 1, **caractérisée en ce que** les deux leviers (22, 24) sont montés de manière à pivoter, indépendamment l'un de l'autre, autour d'axes de rotation (26, 28) différents.

3. Commande d'appui-tête selon la revendication 2, **caractérisée en ce que** les leviers (22, 24) sont pourvus, autour de leurs axes de rotation (26, 28), de roues dentées ou de segments de roue dentée (30, 32) qui s'engrènent les uns dans les autres.

4. Commande d'appui-tête selon la revendication 3, **caractérisée en ce que** le moteur (12) entraîne, par l'intermédiaire d'un démultiplicateur (38), la roue dentée ou le segment de roue dentée (30) d'un levier (22).

5. Commande d'appui-tête selon l'une des revendications précédentes, **caractérisée en ce qu'**au moins les leviers (22, 24) du mécanisme à leviers (14) sont en matière plastique.

6. Commande d'appui-tête selon l'une des revendications 3-5, **caractérisée en ce que** les roues dentées ou les segments de roue dentée (30, 32) sont formé(e)s d'une seule pièce avec les leviers (22, 24).

7. Commande d'appui-tête selon l'une des revendications précédentes, **caractérisée en ce que**, aux extrémités des leviers, sont prévus des rouleaux (42, 44) montés de manière à toumer, lesquels coulissent dans la rainure (46) de l'élément de guidage (48).

8. Commande d'appui-tête selon l'une des revendications précédentes, **caractérisée en ce que**, pour relier l'élément de guidage (48) à l'appui-tête (18), sont prévus deux supports ronds (16), guidés dans des tubes de guidage (64) montés de manière fixe, qui assurent en même temps, par l'intermédiaire des supports (16), le guidage de l'élément de guidage (48).

9. Commande d'appui-tête selon l'une des revendications précédentes, **caractérisée en ce que** le ou les support(s) (16) (dont il en existe au moins un) présente(nt) une articulation (54), laquelle permet un rabattement de l'appui-tête (18) vers l'avant ou vers l'arrière lorsque l'appui-tête (18) est suffisamment sorti.

10. Commande d'appui-tête selon la revendication 9, **caractérisée en ce que** la partie de support (52) située entre l'appui-tête (18) et l'articulation (54) est suffisamment longue pour être encore engagée sur une longueur suffisante dans le tube de guidage (64) lorsque l'appui-tête (18) se trouve dans sa position d'utilisation la plus élevée.

11. Commande d'appui-tête selon la revendication 9 ou 10, **caractérisée en ce que** les articulations (54) des deux supports (16) se composent d'éléments de traction (56) revêtus d'une matière élastique caoutchoutée (58).

12. Commande d'appui-tête selon l'une des revendications 9 à 11, **caractérisée en ce que** les articulations (16) disposent chacune, à leurs extrémités, d'un tenon fileté (60) vissé dans des éléments (50, 52), lesquels forment les parties de support supérieure et inférieure.

13. Commande d'appui-tête selon l'une des revendications 9 à 12, **caractérisée en ce que** les tubes de guidage (20, 64) possèdent, à leur extrémité supérieure, des zones de renvoi (66), lesquelles sont ouvertes vers l'avant ou vers l'arrière et qui rendent possible, lorsque l'appui-tête (18) est suffisamment sorti, son rabattement vers le côté ouvert.

14. Commande d'appui-tête selon l'une des revendications 9 à 13, **caractérisée en ce que** les tubes de guidage (64) sont disposés de manière inclinée.

15. Commande d'appui-tête selon la revendication 13 ou 14, **caractérisée en ce que** la zone de renvoi (66) se compose d'un arrondi (68) auquel est contigu un support (70), orienté de manière essentiellement horizontale, destiné à la partie de support supérieure (52).

16. Commande d'appui-tête selon la revendication 15, **caractérisée en ce que** l'arrondi (68) et le support (70) possèdent une section essentiellement semi-circulaire correspondant à la section de la partie de support supérieure (52).

17. Commande d'appui-tête selon l'une des revendications précédentes, **caractérisée en ce qu'**un interrupteur final (72) est prévu, lequel limite le déplacement de l'appui-tête (18).

18. Commande d'appui-tête selon l'une des revendications précédentes, **caractérisée en ce qu'**un contact est prévu, grâce auquel l'appui-tête (18) peut être déplacé, au-delà sa position finale normale, jusqu'à basculer.

19. Commande d'appui-tête selon l'une des revendications précédentes, **caractérisée en ce qu'**un système de reconnaissance d'occupation des sièges est prévu, lequel replace l'appui-tête (18) au moins dans sa position d'utilisation la plus élevée lorsque le siège est occupé et, lorsque le siège est inoccupé, rabat l'appui-tête (18).

20. Commande d'appui-tête selon l'une des revendications précédentes, **caractérisée en ce qu'**un commutateur à touches est disposé sur un ou plusieurs sièges, grâce auquel il est possible de commander un réglage par moteur électrique de la hauteur de l'appui-tête.
